# EUROPEAN PATENT APPLICATION

(11) **EP 4 304 010 A1**
(43) Date of publication of application: **10.01.2024**
(21) Application number: 22183626.5
(22) Date of filing: 07.07.2022
(51) Int. Cl.: H01Q 1/52, H01Q 15/00, H01Q 1/32

(54) **RADAR SYSTEM WITH ADHESIVE LAYER FOR ISOLATION OF VERTICAL FEED LINES**

(71) Applicant: Aptiv Technologies Limited, St. Michael (BB)
(72) Inventor: Talai, Armin, 90431 Nuremberg (DE); Leonardi, Roberto, 90403 Nuremberg (DE)
(74) Representative: Bardehle Pagenberg Partnerschaft mbB Patentanwälte Rechtsanwälte

(57) **Abstract**

Provided is a radar system, comprising: an antenna printed circuit board (1) comprising at least one transmit antenna and at least one receive antenna; a radar control module (3); an adhesive layer (2) provided between the antenna printed circuit board (1) and the radar control module (3); and vertical feed lines (4, 5, 55) respectively connecting the at least one transmit antenna and the radar control module (3) and respectively connecting the at least one receive antenna and the radar control module (3); whereby the adhesive layer (2) comprises at least one cut-out region (8, 60) being structured by having a non-straight side boundary to direct an electromagnetic wave emanating from a first vertical feed line (4) away from arriving at one or more of the vertical feed lines (4, 5, 55).

## Description

### [Technical Field]

The present disclosure generally relates to radar systems. In particular, the present disclosure relates to radar systems employing an adhesive layer used for mounting an antenna printed circuit board to a radar control module.

### [Background]

In conventional radar ("radio detection and ranging") systems, an antenna printed circuit board (PCB) is mounted on a radar control module (RCM) using an adhesive layer, for example a pressure sensitive adhesive (PSA). Vertical feed lines connect antennas on the antenna PCB and the RCM. In such a radar system, electromagnetic energy leaks into the adhesive layer (e.g. PSA layer) causing an unwanted coupling between the vertical feed lines of the antennas. There is thus a need in the art to address this technical problem.

### [Summary]

According to a first aspect of the present disclosure, a radar system comprises: an antenna printed circuit board comprising at least one transmit antenna and at least one receive antenna; a radar control module; an adhesive layer provided between the antenna printed circuit board and the radar control module; and vertical feed lines respectively connecting the at least one transmit antenna and the radar control module and respectively connecting the at least one receive antenna and the radar control module; whereby the adhesive layer comprises at least one cut-out region being structured by having a non-straight side boundary to direct an electromagnetic wave emanating from a first vertical feed line away from arriving at one or more of the vertical feed lines.

According to a second aspect of the present disclosure the at least one cut-out region comprises a first-type cut-out region having the first vertical feed line disposed therein.

According to a third aspect of the present disclosure the first-type cut-out region has a tapered form or a widening form, whereby the first-type cut-out region is tapered between the first vertical feed line and a third vertical feed line disposed in the first-type cut-out region.

According to a fourth aspect of the present disclosure the at least one cut-out region comprises a second-type cut-out region having spatial dimensions smaller than the vertical feed lines and being structured so that the electromagnetic wave emanating from the first vertical feed line in a first cut-out region is directed away from arriving at a second vertical feed line in a second cut-out region.

According to a fifth aspect of the present disclosure the second-type cut-out region comprises a plurality of line segments each being connected to at least one other of the plurality of line segments at a certain angle.

According to a sixth aspect of the present disclosure the second-type cut-out region has a V-shape or a Y-shape.

According to a seventh aspect of the present disclosure the second-type cut-out region is oriented between the first and second cut-out region so that a tip of the second-type cut-out region is directed toward the first vertical feed line.

According to an eight aspect of the present disclosure a plurality of second-type cut-out regions is arranged between the first and second cut-out region.

According to a ninth aspect of the present disclosure the plurality of second-type cut-out regions is provided along a first row having a predetermined radar wavelength dependent distance from the first cut-out region.

According to a tenth aspect of the present disclosure the plurality of second-type cut-out regions is staggered to each other along a first row and a second row.

According to an eleventh aspect of the present disclosure a distance between a first second-type cut-out region in the first row and a second second-type cut-out region in the second row is a predetermined radar wavelength dependent distance.

According to a twelfth aspect of the present disclosure the adhesive layer further comprises a linear-shaped cut-out region having spatial dimensions smaller than the vertical feed lines and being provided in front of the second cut-out region.

According to a thirteenth aspect of the present disclosure the second-type cut-out region has a permittivity different from the adhesive layer.

According to a fourteenth aspect of the present disclosure an adhesive layer for a radar system is configured to mount an antenna printed circuit board to a radar control module, the antenna printed circuit board comprising at least one transmit antenna and at least one receive antenna, each of which being respectively connected to the radar control module via a vertical feed line; whereby the adhesive layer comprises at least one cut-out region being structured by having a non-straight side boundary to direct an electromagnetic wave emanating from a first vertical feed line away from arriving at one or more of the vertical feed lines.

According to a fifteenth aspect of the present disclosure a vehicle comprises a radar system according to one of the first to thirteenth aspect.

### [Brief description of the drawings]

Embodiments of the present disclosure, which are presented for better understanding the inventive concepts, but which are not to be seen as limiting the disclosure, will now be described with reference to the figures in which:
- Fig. 1: shows a vertical cross-sectional view of the radar system in the y-z plane;
- Fig. 2: shows a vertical cross-sectional view of the radar system in the x-z plane;
- Fig. 3A: shows a horizontal cross-sectional view of the adhesive layer in the x-y plane including a rectangular cut-out region;
- Fig. 3B: shows a horizontal cross-sectional view of the adhesive layer in the x-y plane including a tapered cut-out region;
- Fig. 4: shows a cross-sectional view of the adhesive layer in the x-y plane including two rectangular cut-out regions;
- Fig. 5: shows a cross-sectional view of the adhesive layer in the x-y plane including two rectangular cut-out regions and three V-shaped cut-out regions;
- Fig. 6: shows a cross-sectional view of the adhesive layer in the x-y plane including two rectangular cut-out regions, three V-shaped cut-out regions and a linear-shaped cut-out region;
- Fig. 7A: shows the energy leakage for an adhesive layer with conventional cut-out regions;
- Fig. 7B: shows the energy leakage for an adhesive layer with cut-out regions according to present embodiments;
- Fig. 8A: shows the average coupling between all transmit antennas and all receive antennas versus the frequency of the radar wave for an adhesive layer with conventional cut-out regions;
- Fig. 8B: shows the average coupling between all transmit antennas and all receive antennas versus the frequency of the radar wave for an adhesive layer cut-out regions according to present embodiments;
- Fig. 9A: shows the average coupling between all transmit antennas versus the frequency of the radar wave for an adhesive layer with conventional cut-out regions;
- Fig. 9B: shows the average coupling between all transmit antennas versus the frequency of the radar wave for an adhesive layer cut-out regions according to present embodiments;
- Fig. 10A: shows the azimuth angle error versus the azimuth angle of the measured object for an adhesive layer with conventional cut-out regions; and
- Fig. 10B: shows the azimuth angle error versus the azimuth angle of the measured object for an adhesive layer cut-out regions according to present embodiments.

### [Detailed description]

Various conventional radar systems use an adhesive layer for mounting an antenna PCB to an RCM. The antenna PCB comprises at least one transmit (Tx) antenna and at least one receive (Rx) antenna, each of which are connecting to the RCM via vertical feed lines. The vertical feed lines may leak energy into the adhesive layer in the form of transverse electromagnetic radiation. The adhesive layer between the antenna PCB and the RCM can be considered as a dielectric medium.

Conventional materials for low-cost adhesive layers have a low permittivity and low dielectric loss. The surfaces of both the antenna PCB and the RCM contain approximately full-surface metallization. Therefore, the adhesive layer in between the antenna PCB and the RCM creates a parallel plate waveguide, enabling parasitic leakage paths between vertical feed lines. In conventional radar systems, leakage through the adhesive layer may correspond to up to 10% of the total transmitted power through the feeding lines. As a consequence, the electromagnetic coupling between antennas (Rx-Tx / Rx-Rx / Tx-Tx) has reached levels which deteriorate the range accuracy, angle accuracy and noise floor of the whole radar system.

It is an aim of the present disclosure to provide a solution to the above problem at low cost, that is, without resorting to a more expensive conductive material for the adhesive layer material or using more expensive hybrid-PCBs, which do not require an adhesive layer. The present disclosure enables controlling and reducing the leakage of energy into the adhesive layer by optimizing the structure of the adhesive layer.

The present disclosure shall now be described in conjunction with specific embodiments. The specific embodiments serve to provide the skilled person with a better understanding but are not intended to in any way restrict the scope of the disclosure, which is defined by the appended claims. In particular, the embodiments described independently throughout the description can be combined to form further embodiments to the extent that they are not mutually exclusive.

A radar system comprises an antenna printed circuit board (PCB) 1 with at least one transmit antenna and at least one receive antenna. Electromagnetic waves in the radio-frequency (RF) or microwave domain may be transmitted by the at least one transmit antenna. The electromagnetic waves may be reflected by one or more objects and the reflected electromagnetic waves may then be received by the at least one receive antenna. This way, the radar system may determine the distances, angles, and radial velocities of the one or more objects relative to the radar system.

Radar systems may be applied in automotive vehicles to provide monitoring of the environment. This may include detection and ranging of other vehicles, pedestrians, cyclists and other obstacles. The data generated by the radar system may be used to facilitate autonomous driving and parking and may enable safety features such adaptive cruise control (ACC) and emergency braking.

The radar system further comprises a radar control module (RCM) 3. The RCM 3 may be used to control the at least one transmit antenna and process signals received by the at least one receive antenna. The electronic circuitry of the RCM 3 may be implemented using another substrate-based PCB.

The radar system further comprises an adhesive layer 2 provided between the antenna PCB 1 and the RCM 3. The adhesive layer 2 may provide a mechanical connection between adjacent parts with which it is in contact. In other words, the antenna PCB 1 may be glued to the RCM 3 using the adhesive layer 2. Typically, the thickness of the adhesive layer 2 may be around 50 µm. The adhesive layer 2 may be provided by a pressure-sensitive adhesive (PSA), for example, in the form of a double-sided tape. The adhesive layer 2 may be provided by a single piece of adhesive tape or by and arrangement of multiple pieces of adhesive tape. The adhesive layer 2 may facilitate mounting of the antenna PCB 1 to the RCM 3 at low manufacturing costs.

The radar system further comprises vertical feed lines 4, 5, 55 respectively connecting the at least one transmit antenna and the RCM 3 and respectively connecting the at least one receive antenna and the RCM 3. In other words, each antenna may be connected to the RMC 3 using a dedicated vertical feed line. This way, the antennas 6, 7, 77 of the antenna PCB 1 may exchange signals with the RCM 3. The RCM 3 may control the transmission of electromagnetic waves by the at least one transmit antenna and detect signals, such as reflected electromagnetic waves, received by the at least one receive antenna, via the respective vertical feed lines 4, 5, 55.

The adhesive layer 2 comprises at least one cut-out region 8, 60. A cut-out region may generally be considered as a spatial region of the adhesive layer from which the inherent adhesive layer material (material from which the adhesive layer is made) is removed. One or more vertical feed lines 4, 5, 55 may be disposed within one or more of the at least one cut-out region 8, 60. A cut-out region in which one or more vertical feed lines 4, 5, 55 are disposed is referred to as a first-type cut-out region in the following. Likewise, there may exist one or more cut-out regions with spatial dimensions smaller than the vertical feed lines 4, 5, 55, which means that no vertical feed lines 4, 5, 55 are disposed therein. This kind of cut-out region is referred to as a second-type cut-out region in the following.

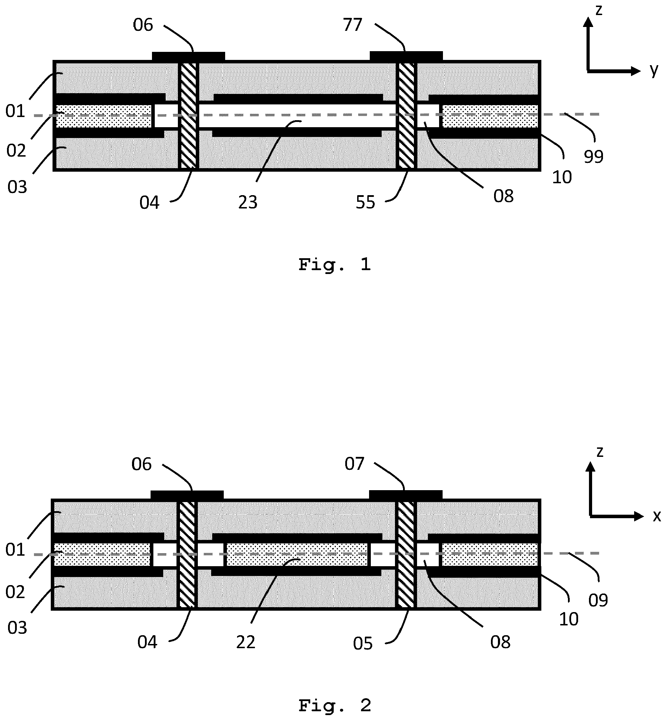

The positional arrangement of the antenna PCB 1, adhesive layer 2 and RCM 3 is described with reference to Figs. 1 and 2 which illustrate an example with a first, a second and a third antenna 6, 7, 77 that are respectively connected to the RCM 3 via a first, a second and a third vertical feed line 55.

Fig. 1 shows a vertical cross-sectional view of the radar system in the y-z plane. The antenna PCB 1, the adhesive layer 2 and the RCM 3 are stacked onto each other in the z-direction. The cut-out region 8 is a space between antenna PCB 1 and the RCM 3 in which no adhesive layer 2 is provided. The cut-out region 8 may be filled with air or a dielectric material different from that of the adhesive layer 2. At the boundary between the cut-out region 8 and the adhesive layer 2 reflection and refraction of electromagnetic waves may occur. A first antenna 6 is connected to the RCM 3 via the first vertical feed line 4. Closely spaced thereto, the third antenna 77 is connected to the RCM 3 via the third vertical feed line 55. For example, the first and third antenna 6, 77 may be a pair of transmit antennas or a pair of receive antennas. Due to the relatively close spacing of the first and third vertical feed line 4, 55 in the y-direction, the cut-out region 8 may extend in a first space 23 between said vertical feed lines 4, 55 for clearance reasons. Clearance reasons may for example be motivated by structural limitations of the adhesive layer 2 and/or manufacturing limitations.

Fig. 2 shows a vertical cross-sectional view of the radar system in the x-z plane. Here, a second antenna 7 is connected to the RCM 3 via the second vertical feed line 5. For example, the first antenna 6 may be a transmit antenna and the second antenna 7 may be a receive antenna. Likewise, the first antenna 6 may be a receive antenna and the second antenna 7 may be a transmit antenna. In this example, the spacing between the first vertical feed line 4 and the second vertical feed line 5 in the x-direction is assumed to be wider than the spacing between the first and third vertical feed lines 4 ,55 in y-direction. Hence, due to the relatively wide spacing of the vertical feed line 4, 5 in the x-direction, the adhesive layer 2 may be provided also in a second space 22 between said vertical feed lines 4, 5 in order to prevent mechanical delamination of the antenna PCB 1 and RCM 3. Hence, there may be two separate first-type cut-out regions: a first cut-out region in which the first vertical feed-line 4 is disposed and a second cut-out region in which the second vertical feed line 5 is disposed.

Note that the layout of the RCM 3 is not limited to that shown in Figs. 1 and 2. Instead, the RCM 3 may be configured such that the vertical feed lines 4, 5, 55 do not go through the RCM 3, but start at the top surface of the RCM 3 and go from there to the antennas. Thus, the vertical feed lines 4, 5, 55 may be an interface that can either connect the top surface of the RCM 3 to the antennas or connect the bottom surface of the RCM 3 to the antennas. An interface can be anything that routes electromagnetic radiation or electric current, like a waveguide, coupling structure, transmission line, or the like.

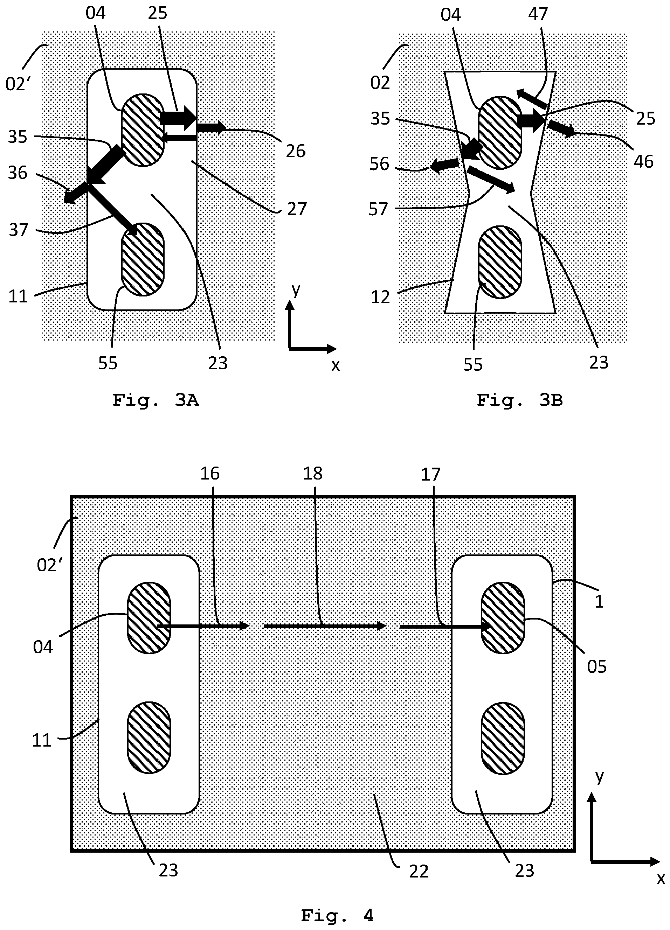

The dashed line 99 in Fig. 1 illustrates a horizontal x-y cross-section through the adhesive layer 2, which will be described in the following with reference to Figs. 3A and 3B. The opposing surface layers 10 of the antenna PCB 1 and the RCM 3 may approximately have full metallization and be connected to ground and may thus form a parallel plate waveguide with the air within the first space 23 or the adhesive layer 2 disposed in the second space 22, which permits transverse electromagnetic wave propagation in the x-y plane. The dashed line 9 in Fig. 2 illustrates a horizontal x-y cross-section through the adhesive layer 2, which will be described in the following with reference to Figs. 4 to 6.

According to present studies of conventional radar systems, the parallel plate waveguide may cause that up to around 10 percent of the energy in the vertical feed lines 4, 5, 55 leaks into the adhesive layer 2 in the form of transverse electromagnetic wave propagation. This way, the first, second and third vertical feed lines 4, 5, 55 may become coupled to one another. Depending on the amount of energy leaked from one vertical feed line to another vertical feed line, the coupling between them may increase.

A coupling between vertical feed lines of two receive antenna, between vertical feed lines of two transmit antennas or a coupling of a vertical feed line to itself may lead to lead to various technical problems. For example, the coupling may lead to an increase in gain (amplitude) and phase ripples in the radar signal. Furthermore, due to the coupling, the difficulty of single feed line matching may increase. That is, matching an input impedance at the end of a feed line of an antenna to the characteristic impedance of the feed line. Moreover, the coupling may lead to an increase of the phase and/or angle error on the detected angle of an object with respect to the radar system. It is, however, difficult to reduce this phase and/or angle error through calibration. In the following, transverse electromagnetic waves are simply referred to as electromagnetic waves.

By reducing the coupling of vertical feed lines, the effects of the above problems may be reduced. One solution would be to use a conductive material for the adhesive layer. This way, propagation of electromagnetic wave would be omitted. However, compared to dielectric materials, such a solution would result in a significantly more expensive radar system. Hence, the present disclosure aims to provide a solution applicable to lost-cost adhesive layers made from dielectric material by using an optimized layout and shape of cut-outs regions.

The at least one cut-out region 8, 60 is structured by having a non-straight side boundary to direct an electromagnetic wave emanating from the first vertical feed line 4 away from arriving at one or more of the vertical feed lines 4, 5, 55. A non-straight side boundary 12 may have any irregular shape involving two or more different directions such as a graded, tapered, widening, convex, concave, zig-zag or sawtooth shape. A cut-out region 8, 60 with a non-straight side boundary 12 may be provided, for example, by two or more line segments connected at a certain angle. A rectangular boundary 11 having rounded corners is not considered to be a non-straight side boundary. The boundary between a cut-out region and the adhesive layer represents a material transition from one medium to another. Due to the non-straight side boundary 12, an electromagnetic wave emanating from the first vertical feed line 4 may have a non-perpendicular angle of incidence at the boundary 12 between the at least one cut-out region 8, 80, 61 and the adhesive layer 2. In other words, the at least one cut-out regions 8, 60 is arranged such that an electromagnetic wave emanating from the first vertical feed line 4 is reflected or refracted at the boundary 12 of the at least one cut-out region 8, 60 and the adhesive layer 2 in such a way that the electromagnetic wave is deflected and does not arrive at one or more of the vertical feed lines 4, 5, 55.

Since no other material is required and only the structure of the at least one cut-out region 8, 60 in the adhesive layer 2 is affected, the implementation of the adhesive layer 2 according to present embodiments can be assumed to be an approximately cost-neutral factor in the production of the radar system.

According to a further preferred embodiment, the at least one cut-out region 8, 60 may comprise a first-type cut-out region 8 having the first vertical feed line 4 disposed therein. The first-type cut-out region 8 may be structured to direct the electromagnetic wave emanating from the first vertical feed line 4 away from arriving back at the first vertical feed line 4. By preventing such back-reflections, self-coupling of the first vertical feed line 4 may be reduced.

According to a further preferred embodiment, the first-type cut-out region 8 may be structured in such a way so that the electromagnetic wave emanating from the first vertical feed line 4 has a non-perpendicular angle of incidence at a boundary 12 between the first-type cut-out region 8 and the adhesive layer 2. In other words, the shape of the first-type cut-out region 8 may be configured such that electromagnetic wave hits the boundary 12 of the first-type cut-out region at an angle in which the electromagnetic wave is deflected and subsequently propagates away from the first vertical feed line 4. For example, the shape of the first-type cut-out region may be convex with respect to the first vertical feed line 4 within the first-type cut-out region 8. This way, back-reflection of the electromagnetic wave may be prevented and self-coupling of the first vertical feed line 4 is suppressed.

According to a further preferred embodiment, the first-type cut-out region 8 may have a tapered form or a widening form, whereby the first-type cut-out region is tapered or widened between the first vertical feed line 4 and a third vertical feed line 55 disposed in the first-type cut-out region 8. An hour-glass silhouette is an example for a tapered form. An ellipse is an example for a widening form. The tapered or widening shape of the first-type cut-out region may reduce the coupling between the first and third vertical feed line 4, 55. Additionally, the tapered or widening shape may prevent back-reflection of electromagnetic waves emanating from the first and third vertical feed line 4, 55, thereby also reducing self-coupling of first and third vertical feed line 4, 55.

Figs. 3A and 3B illustrate coupling effects for two adjacent vertical feed lines. Here, the first and third vertical feed lines 4, 55 are disposed in a conventional rectangular cut-out region in Fig. 3A and are disposed in a first-type cut-out region 8, similar to the embodiment discussed with reference to Fig. 1A.

Fig. 3A shows a horizontal cross-sectional view of a conventional adhesive layer 2' in the x-y plane including a conventional rectangular cut-out region. Arrows 25 and 35 indicate electromagnetic waves emanating from the first vertical feed line 4. Arrows 26 and 36 indicate the transmitted electromagnetic waves. Arrows 27 and 37 indicate the reflected electromagnetic waves.

The rectangular shape of the conventional cut-out region may lead to a back-reflection (arrow 27) at a boundary 11 to the first vertical feed line 4. Hence, the first vertical feed line 4 may become coupled to itself leading to a degraded matching.

Furthermore, the rectangular shape of the first-type cut-out region may lead to reflected wave (arrow 37) arriving at the third vertical feed line 55. This transferred energy may lead to a degradation of the phase behavior both for a transmit antenna and a receive antenna because the phase information between multiple antennas may be mixed up. As a result, the achieved angular accuracy of the radar system may be degraded.

Fig. 3B shows a horizontal cross-sectional view of the adhesive layer 2 in the x-y plane including a tapered cut-out region 8 according to an embodiment. For comparison with Fig. 3A, arrows 25 and 35 again indicate electromagnetic waves emanating from the first vertical feed line 4. Arrows 46 and 56 indicate the transmitted electromagnetic waves. Arrows 47 and 57 indicate the reflected electromagnetic waves. The tapered shape of the first-type cut-out region 8 causes the emanating electromagnetic waves (arrows 25, 35) to be deflected (arrows 47, 57) such that they do not arrive at the first and third vertical feed lines 4, 55. Hence, coupling of the vertical feed lines disposed in the first-type cut-out region 8 may be reduced and matching may be improved.

Summarizing the functional and structural improvements presented in Fig. 3B by this embodiment, the proposed non-straight line boundary 12 will both reduce the negative impacts by the adhesive layer on single feed line matching and on mutual Tx-Tx and Rx-Rx coupling, enabling a significant improvement on achievable angular error accuracy by the radar system.

Fig. 4 shows a cross-sectional view of a conventional adhesive layer 2' in the x-y plane including two conventional rectangular cut-out regions. The example illustrates coupling effects for two separated vertical feed lines 4, 5. Here, the first and third vertical feed lines 4, 55 are disposed in two separate conventional rectangular cut-out regions.

Each of the two conventional rectangular cut-out regions may contain additional vertical feed lines. Note that, in this case, the terms "first" ("second") vertical feed line may refer to any one of the vertical feed lines disposed in the first (second) cut-out region. For example, the vertical feed lines in the first cut-out region may be connected to transmit antennas and the vertical feed lines in the second cut-out region be connected to transmit antennas.

Arrow 16 indicates an electromagnetic wave emanating from the first vertical feed line 4. The electromagnetic wave enters the adhesive layer 2' and may propagate through the adhesive layer 2' as indicated by arrow 18. Therein, the electromagnetic wave may propagate without being dampened significantly due to the low-loss properties of typical dielectric materials used for low-cost adhesive layers. Arrow 17 indicates the transmitted electromagnetic wave arriving at the second vertical feed line 5, resulting in a strong coupling between the first and the second vertical feed line 4, 5.

Such a coupling of transmit and receive antennas may introduce noise and reduce the achievable sensitivity of the radar system. Reduced sensitivity may be identified as a range reduction of the radar system or as a lower probability to detect low reflecting objects such as pedestrians or cyclists at low distances.

According to a further preferred embodiment, the at least one cut-out region may comprise a second-type cut-out region 60 having spatial dimensions smaller than the vertical feed lines 4, 5, 55 and being structured so that the electromagnetic wave emanating from the first vertical feed line 4 in a first cut-out region is directed away from arriving at a second vertical feed line 5 in a second cut-out region. The second-type cut-out region 60 having spatial dimensions smaller than the vertical feed line 4, 5, 55 means that the second-type cut-out region 60 does not have vertical feed lines disposed therein and/or that the second-type cut-out region 60 has a size smaller than the first-type cut-out region containing vertical feed lines.

In other words, a second-type cut-out region 60 may be arranged such that an electromagnetic wave emanating from the first vertical feed line 4 is refracted at a boundary of the second-type cut-out region 60 and the adhesive layer 2 in such a way that the electromagnetic wave is deflected and does not arrive at the second vertical feed line 5. Hence, the isolation of the first and second vertical feed lines 4, 5 may be improved and thus coupling effects may be mitigated. Preferably, the second-type cut-out region 60 is arranged between the first and the second cut-out region.

According to a further preferred embodiment, the second-type cut-out region 60 may comprise a plurality of line segments each being connected to at least one other of the plurality of line segments at a certain angle to form a non-straight side boundary. Here, Each individual line segment may correspond to a linear-shaped cut-out region but when they are connected together at a certain angle (not 180°/360°), the resulting second-type cut-out region 60 has a non-straight side boundary. For example, the plurality of line segments may comprise two line segments connected at an angle of about 90° to form a V-shaped second-type cut-out region 60. For another example, the plurality of line segments may comprise three line segments connected at a common point at an angle of about 120° to form a Y-shaped second-type cut-out region 60. Alternatively, the angles between the line segments of the Y-shape may comprise one acute angle equal or less than 90° and two angles equal or less than 135° (in sum 360°) .

According to a further preferred embodiment, the second-type cut-out region 60 may have a V-shape or a Y-shape. The opening angle of the V-shape and of the acute-angled part of the Y-shape and the lengths of the line segments are selected parameters to improve the achieved isolation of the vertical feed lines and depend on the positions thereof. The opening angle of the line segments of the V-shape and of the acute-angled part of the Y-shape may be arranged such that the line segments are directed away from the second vertical feed line 5.

Further aspects for the preferred geometry of the V-shape and Y-shape may be good manufacturability and suitable structural size requirements for low-cost stamped-out features. Preferably, small features of the second-type cut-out region 60 that require special treatment like laser structuring are avoided.

According to a further preferred embodiment, the second-type cut-out region 60 may be oriented between the first and second cut-out region so that a tip of the second-type cut-out region 60 is directed toward the first vertical feed line 4. This way, an electromagnetic wave emanating from the first vertical feed line may hit a boundary of the line segments of the V-shape and of the acute-angled part of the Y-shape at a non-perpendicular angle of incidence. In this case, the electromagnetic wave is deflected and subsequently propagates away from the second vertical feed line 4.

According to a further preferred embodiment, a plurality of second-type cut-out regions may be arranged between the first and second cut-out region. By having more than one second-type cut-out region 60 the isolation of first and second vertical feed lines 4, 5 may be improved. The shapes of the plurality of second-type cut-out regions may be the same for all or may be different for each.

According to a further preferred embodiment, the plurality of second-type cut-out regions 60 may be provided along a first row having a predetermined radar wavelength dependent distance from the first cut-out region. The distance may be an integer multiple of one half of the wavelength of the electromagnetic wave inside the adhesive layer 2. This way, destructive interference with the reflected electromagnetic waves may further improve the isolation of the first and second vertical feed lines 4, 5.

According to a further preferred embodiment, the plurality of second-type cut-out regions may be staggered to each other along a first row and a second row. Depending on the available space between the first and second cut-out region, the plurality of second-type cut-out regions may be staggered to each other along three rows or more.

According to a further preferred embodiment, a distance between a first second-type cut-out region in the first row and a second second-type cut-out region in the second row may be a predetermined radar wavelength dependent distance. The distance may be an integer multiple of one half of the wavelength of the electromagnetic wave inside the adhesive layer 2. This way, destructive interference with the reflected electromagnetic waves may further improve the isolation of the first and second vertical feed lines 4, 5.

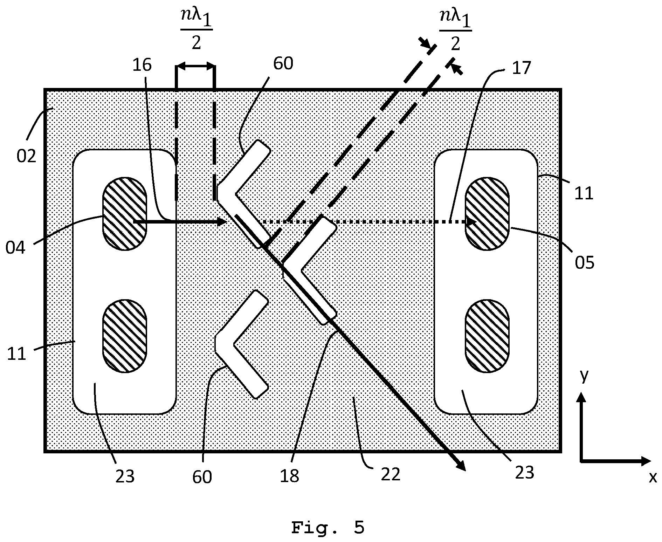

Fig. 5 shows a cross-sectional view of the adhesive layer 2 in the x-y plane including two rectangular cut-out 8 regions and three V-shaped cut-out regions 60. The example illustrates the reduction in coupling between the first and second vertical feed line 4, 5 in comparison to Fig. 4. Here, the electromagnetic wave entering the adhesive layer 2 as indicated by arrow 16 may be deflected by the second-type cut-out regions 2. As a result the deflected electromagnetic wave does not arrive at the second vertical feed line 5 as indicated by arrow 18, resulting in a reduced coupling between the first and the second vertical feed line 4, 5. Note that each of the plurality of second-type cut-out regions may also have a shape other than the V-shape shown in this example. The best shape and layout of the plurality of second-type cut-out regions is subject to optimization. The second-type cut-out regions may also be referred to as deflecting structures. Here, a first row of V-Shaped deflecting structures may be placed inside the adhesive layer 2 at a distance of *n λ*₁/2 to the adhesive edge next to vertical transition 4, where n is an integer number and *λ*₁ is the wave length of the TEM wave inside the adhesive layer 2.

This ensures minimized reflection by the V-Shape structures. The function of the V-Shape is to catch propagating TEM waves 16, and alternate their propagation directions 18, so that the major amount of electromagnetic energy propagating from vertical transition 4 to 5 is redirected towards non-critical areas (i.e. areas not occupied by vertical transitions). A smaller yet more acceptable part of this TEM energy 17 may still be coupled into vertical transition 5. Optionally, a second or more rows of V-Shapes may be added according to geometrical distance recommendation given in the Fig. 5, in order to improve the achieved level for Tx-Rx isolation. The V-Shapes may be made of air or could also be made of a dielectric with a different permittivity than the adhesive comprises.

Here, the opening angle of the V-shaped deflecting structures and the lengths of the V's are parameters to improve the achieved isolation and depend on the position of the transitions. A further aspect for selecting the proposed V-shaped deflecting structures geometry is good manufacturability and suitable structural size requirement for low cost stamped out features. Small features that require special treatment like laser structuring are avoided. In summary, leaked TEM waves are deflected by V-Shaped deflecting structures leading to reduced Tx-Rx coupling and therefore, to a reduction of the noise floor.

According to a further preferred embodiment, the adhesive layer 2 may further comprise a linear-shaped cut-out region 61 having spatial dimensions smaller than the vertical feed lines 4, 5, 55 and being provided in front of the second cut-out region. The linear-shaped cut-out region 61 having spatial dimensions smaller than the vertical feed line means that the linear-shaped cut-out region 61 does not have vertical feed lines disposed therein.

For example, the linear-shaped cut-out region 61 may be disposed behind the plurality of second-type cut-out regions to further reduce the coupling between the first and second vertical feed line 4, 5.

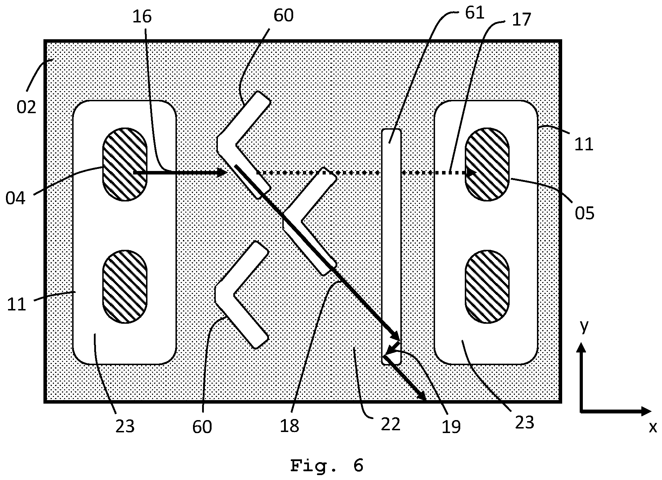

Fig. 6 shows a cross-sectional view of the adhesive layer 2 in the x-y plane including two rectangular cut-out regions 8, three V-shaped cut-out regions 60 and the linear-shaped cut-out region 61. As indicated by arrow 19, the deflected electromagnetic wave (arrow 18) may further be deflected one or more times inside the linear-shaped cut-out region 61 leading to further reduced coupling. The linear-shaped cut-out region 61 may also be referred to as special cavity and further reduce Tx-Rx coupling 17 from vertical transition 4 to 5. The skilled person understands that leaked TEM waves are deflected by V-shaped deflection structures and subsequently further deflected by multiple bounces inside the cavity.

According to a further preferred embodiment, the second-type cut-out region 60 may have a permittivity different from the adhesive layer 2. The second-type cut-out region 60 may be made of air or may be made of a dielectric material with a different permittivity than the material of the adhesive layer 2. In other words, the volume, defined by the shape of the cut-out region 60 and the height of the adhesive layer 2, may be filled with air or may be filled with a dielectric material with a different permittivity than the material of the adhesive layer 2. Likewise, the linear-shaped cut-out region 61 may also have a permittivity different from the adhesive layer 2. The permittivities of one or more second-type cut-out regions 60 and the linear-shaped cut-out regions 61 may be mutually different.

The radar system 1 may be applied in a vehicle. The radar system 1 may be used to provide monitoring of the environment of the vehicle. This may include detection and ranging of other vehicles, pedestrians, cyclists and other obstacles. The data generated by the radar system 1 may be used to facilitate autonomous driving and parking and may enable safety features such adaptive cruise control (ACC) and emergency braking. The adhesive layer 2 according to present embodiments enables such vehicle operations to be performed with higher accuracy without increasing the manufacturing cost of the radar system 1 of the vehicle.

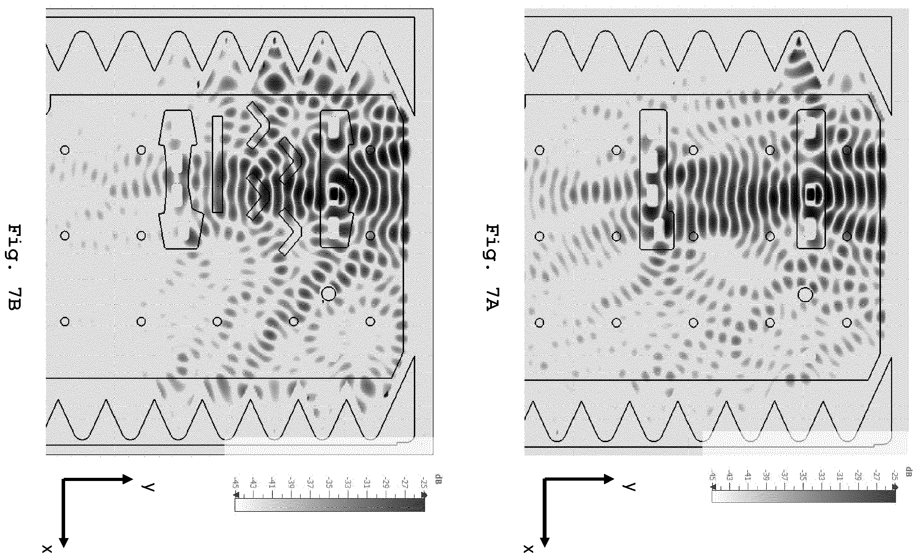

Figs. 7 to 10 compare the simulation results for the energy leakage due to transverse electromagnetic waves in conventional adhesive layers and in adhesive layers with selected configurations of the present embodiments.

Fig. 7A shows the energy leakage for a conventional adhesive layer. The upper rectangular box represents a first conventional cut-out region of the first type and contains three transmit antennas. The lower (approximately) rectangular box represents a second conventional cut-out region of the first type and contains four receive antennas. The second conventional cut-out region has a small protrusion to accommodate the slightly upward-shifted rightmost vertical feed line. Hence, both the first and the second conventional cut-out regions have a straight side boundary.

As shown by the greyscale ripples, transverse electromagnetic waves emanate from the transmit antennas propagating predominantly parallel to the y-direction and arriving at the receive antennas. At the receive antennas these transverse electromagnetic waves result in a peak signal-to-noise ratio of up to around -25 dB as indicated by the greyscale. Hence, a strong coupling mediated by a conventional adhesive layer between the transmit and receive antennas can be observed.

Fig. 7B shows the energy leakage for an adhesive layer according to present embodiments. The upper box represents a first cut-out region of the first type having a non-straight side boundary and containing three transmit antennas. In this example, the upper portion of the first cut-out region has a non-straight side while the left, right and bottom portion have straight sides. The lower box represents a second cut-out region of the first type having a non-straight side boundary with a tapered form and containing four receive antennas. Between the first and second cut-out regions there are two rows of V-shaped cut-out regions and a linear-shaped cut-out region of the second type.

As shown by the greyscale ripples, transverse electromagnetic waves emanating from the transmit antennas are dispersed by the second-type V-shaped and linear-shaped cut-out regions such that a significant portion of the energy of the transverse electromagnetic waves is deflected and does not arrive at the receive antennas. At the receive antennas the peak signal-to-noise ratio reaches up to around -33 dB as indicated by the greyscale. Hence, the coupling between transmit and receive antennas may be significantly reduced compared to the conventional adhesive layer discussed with reference to Fig. 7A.

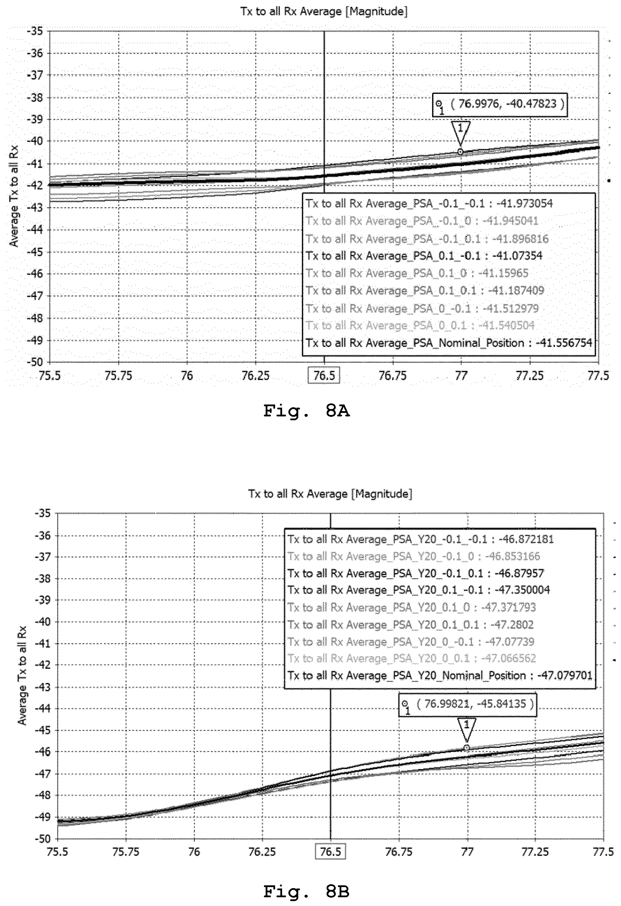

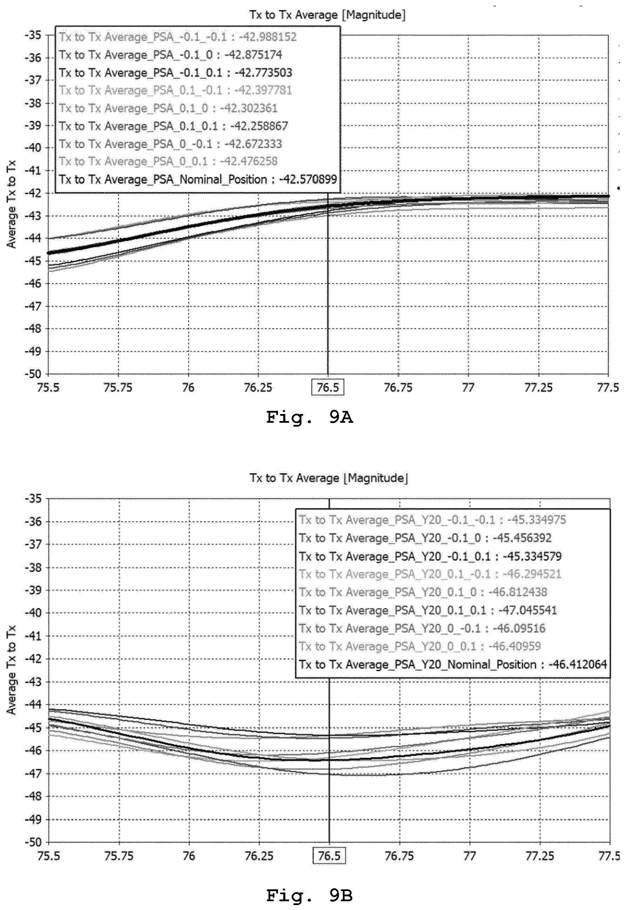

Figs. 8 and 9 show couplings between antennas versus the frequency of the radar wave for a conventional adhesive layer (Figs. 8A and 9A) and an adhesive layer according to the present embodiments (Figs. 8B and 9B). The individual curves correspond to the nominal positioning and ±0.1 mm variations of the positioning of the adhesive layer along the x- and y-direction. These variations correspond to the typical accuracy of positioning the adhesive layer on the antenna PCB or the RCM. Thus, the band enclosing the individual curves may indicate a range of expected measurement result based on a typical manufacturing accuracy.

Fig. 8A shows the average coupling between all transmit antennas and all receive antennas versus the frequency of the radar wave for a conventional adhesive layer, i.e. for an adhesive layer with conventional cut-out regions. For a radio frequency radar wave of around 76.5 GHz the signal-to-noise ratio at one of the receive antennas is around -42 dB.

Fig. 8B shows the average coupling between all transmit antennas and all receive antennas versus the frequency of the radar wave for an adhesive layer with cut-out regions according to the present embodiments. For a radio frequency radar wave of around 76.5 GHz the signal-to-noise ratio at the receive antennas is around -47 dB. Hence, the coupling between transmit and receive antennas may be significantly reduced compared to the conventional adhesive layer discussed with reference to Fig. 8A.

Fig. 9A shows the average coupling between all transmit antennas versus the frequency of the radar wave for an adhesive layer with conventional cut-out regions. For a radio frequency radar wave of around 76.5 GHz the signal-to-noise ratio at one of the transmit antennas is around -43 dB.

Fig. 9B shows the coupling between all transmit antennas versus the frequency of the radar wave for an adhesive layer with cut-out regions according to present embodiments. For a radio frequency radar wave of around 76.5 GHz the signal-to-noise ratio at the transmit antennas is around -46 dB. Hence, the coupling between transmit antennas may be significantly reduced compared to the conventional adhesive layer discussed with reference to Fig. 9A.

Similar results as the ones exemplified by Figs. 9A and 9B are found for the coupling between two receive antennas.

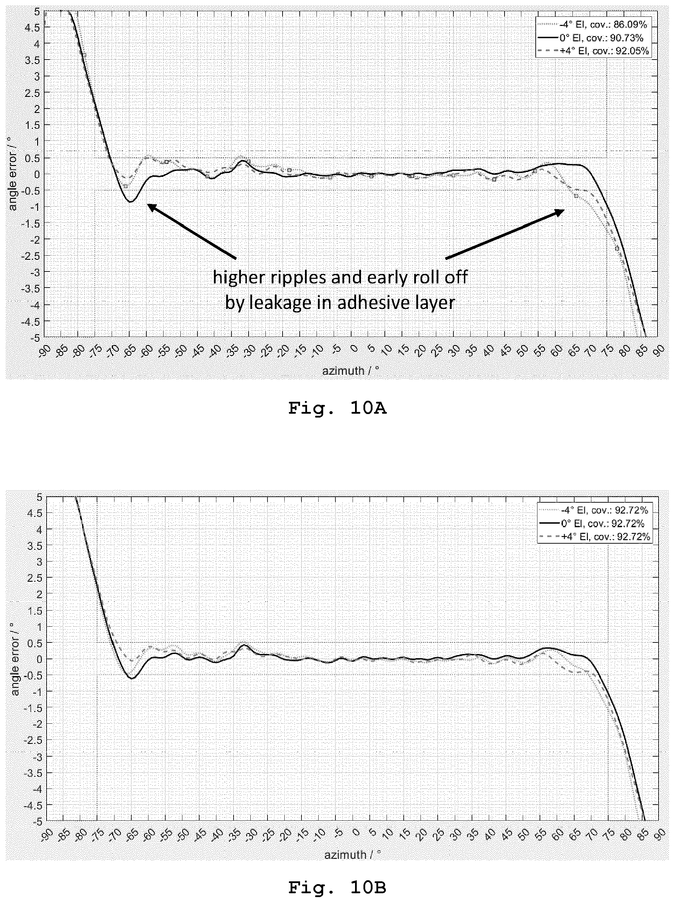

Fig. 10A shows the azimuth angle error versus the azimuth angle of the measured object for a conventional adhesive layer. Fig. 10B shows the azimuth angle error versus the azimuth angle of the measured object for an adhesive layer with cut-out regions according to present embodiments. In each of Figs. 10A and 10B, the three different curves correspond to three variations of elevation (polar angle) of the object. For the conventional adhesive layer, the relatively strong coupling between transmit antennas and between receive antennas leads to a relatively large measurement error on the azimuth angle of the object in the more peripheral range of the radar system's field of view. In the range between 60° and 70° (-70° and - 60°) the leakage in the conventional adhesive layer causes higher ripples and early roll off. The adhesive layer according to the present embodiments improves the isolation of transmit antennas and of receive antennas resulting in a lower measurement error on the azimuth angle.

Similar improvements as the ones exemplified by Figs. 10A and 10B are found for the error on the polar angle (elevation) of an object at fixed azimuth angle.

The present disclosure provides the following technical benefits:
1. The adhesive layer outline between adjacent vertical transitions according to the present embodiments improves matching and Tx-Tx / Rx-Rx Isolation.
2. The additional deflection optimized deflection geometries (such as V- or Y-Shapes, Cavity) controls propagation paths inside the adhesive layer and significantly reduces mutual coupling (many dB's improvement possible).
3. Since no other material is required, and only the shape of the cut-out in the adhesive layer is affected, those benefits can be assumed as cost neutral.
4. Degradations on angular accuracy and noise floor by adhesive layer can be avoided leading to further reduced coupling. The width of the cavity can be adapted to minimize electromagnetic energy traveling on path 17.

The skilled person understands that the present disclosure differs from the prior art by introducing a control of the propagation direction of leaked TEM waves inside adhesive layers of a radar system (such as PSA layers), using special adapted cut-outs and features.

This may lead to a reduced coupling at the antenna feed lines (such as Tx-Rx, Rx-Rx, Tx-Tx) and improves the achievable angular accuracy by the radar system. Furthermore, reduced Tx-Rx coupling also can decrease the noise floor. Furthermore, also single feed line matching can be improved. Since just the cut-out mask of the adhesive layer (such as PSA layer) may be changed by this disclosure, these additional features are low cost in nature, as compared to, for example solutions that employ more expensive PSA materials or hybrid PCBs that do not require a PSA layer.

## Claims

1. A radar system, comprising:
an antenna printed circuit board (1) comprising at least one transmit antenna and at least one receive antenna;
a radar control module (3);
an adhesive layer (2) provided between the antenna printed circuit board (1) and the radar control module (3); and
vertical feed lines (4, 5, 55) respectively connecting the at least one transmit antenna and the radar control module (3) and respectively connecting the at least one receive antenna and the radar control module (3);
whereby the adhesive layer (2) comprises at least one cut-out region (8, 60) being structured by having a non-straight side boundary to direct an electromagnetic wave emanating from a first vertical feed line (4) away from arriving at one or more of the vertical feed lines (4, 5, 55).

2. The radar system of claim 1, whereby the at least one cut-out region (8) comprises a first-type cut-out region (8) having the first vertical feed line (4) disposed therein.

3. The radar system of one of claims 1 - 2, whereby the first-type cut-out region (8) has a tapered form or a widening form, whereby the first-type cut-out region is tapered between the first vertical feed line (4) and a third vertical feed line (55) disposed in the first-type cut-out region (8).

4. The radar system of one of claims 1 - 3, wherein the at least one cut-out region (8, 60) comprises a second-type cut-out region (60) having spatial dimensions smaller than the vertical feed lines and being structured so that the electromagnetic wave emanating from the first vertical feed line (4) in a first cut-out region is directed away from arriving at a second vertical feed line (5) in a second cut-out region.

5. The radar system of claim 4, wherein the second-type cut-out region (60) comprises a plurality of line segments each being connected to at least one other of the plurality of line segments at a certain angle.

6. The radar system of claim 5, wherein the second-type cut-out region (60) has a V-shape or a Y-shape.

7. The radar system of one of claims 5 - 6, wherein the second-type cut-out region (60) is oriented between the first and second cut-out region so that a tip of the second-type cut-out region (60) is directed toward the first vertical feed line (4).

8. The radar system of one of claims 5 - 7, wherein a plurality of second-type cut-out regions is arranged between the first and second cut-out region.

9. The radar system of claim 8, wherein the plurality of second-type cut-out regions (60) is provided along a first row having a predetermined radar wavelength dependent distance from the first cut-out region.

10. The radar system of claim 8, wherein the plurality of second-type cut-out regions is staggered to each other along a first row and a second row.

11. The radar system of claim 10, wherein a distance between a first second-type cut-out region in the first row and a second second-type cut-out region in the second row is a predetermined radar wavelength dependent distance.

12. The radar system of one of claims 4 - 11, wherein the adhesive layer (2) further comprises a linear-shaped cut-out region (61) having spatial dimensions smaller than the vertical feed lines and being provided in front of the second cut-out region.

13. The radar system of one of claims 4 - 12, wherein the second-type cut-out region (60) has a permittivity different from the adhesive layer (2).

14. An adhesive layer (2) for a radar system (2), the adhesive layer (2) being configured to mount an antenna printed circuit board (1) to a radar control module (3), the antenna printed circuit board comprising at least one transmit antenna and at least one receive antenna, each of which being respectively connected to the radar control module (3) via a vertical feed line; whereby the adhesive layer (2) comprises at least one cut-out region (8, 60) being structured by having a non-straight side boundary to direct an electromagnetic wave emanating from a first vertical feed line (4) away from arriving at one or more of the vertical feed lines (4, 5, 55).

15. A vehicle comprising a radar system of one of claims 1 - 13.
